# EUROPÄISCHE PATENTSCHRIFT

(11) **EP 1 720 327 B1**
(45) Veröffentlichungstag und Bekanntmachung des Hinweises auf die Patenterteilung: **18.11.2009**
(21) Anmeldenummer: 06008709.5
(22) Anmeldetag: 27.04.2006
(51) Int. Cl.: H04M 1/04, B60R 11/02

(54) **Elektromechanisches Funktionsmodul sowie Aufnahme- und Gerätehalter**
Electromechanical module and device holder
Module électromécanique tel que support d'appareil

(30) Priorität: 02.05.2005 DE 102005020762
(43) Veröffentlichungstag der Anmeldung: 08.11.2006
(73) Patentinhaber: Bury Sp.z.o.o, 39 300 Mielec (PL)
(72) Erfinder: Piekarz, Roman, 39-300 Mielec (PL)
(74) Vertreter: Kaminski, Zbigniew

(56) Entgegenhaltungen:
- EP-A- 1 764 983
- WO-A-01/41484
- WO-A-03/066381
- DE-B4- 19 964 301
- DE-U1- 20 316 891
- US-A1- 2004 087 335

## Beschreibung

Die Erfindung betrifft ein elektromechanisches Funktionsmodul mit einem Aufnahmehalter und einem Gerätehalter für ein elektronisches Gerät, wobei der Aufnahmehalter mechanische Verriegelungselemente zum Eingriff in den Gerätehalter und Verriegelung des Gerätehalters an dem Aufnahmehalter und eine mit der Formgebung des Gerätehalters korrespondierende Aufnahmekontur hat.

Die Erfindung betrifft weiterhin einen Aufnahmehalter sowie einen Gerätehalter zur Verwendung in einem solchen elektromechanischen Funktionsmodul.

Ein solches elektromechanisches Funktionsmodul kann beispielsweise für eine Telefon-Freisprechanlage für ein Mobiltelefon vorgesehen sein. Bekannte Telefon-Freisprechanlagen dieser Art weisen einen Gerätehalter auf, der spezifisch für das jeweilige Mobiltelefon ausgebildet ist und daher in der Lage ist, das Mobiltelefon nicht nur mechanisch korrekt zu halten, sondern auch entsprechend der spezifischen Kontaktanordnung elektrisch zu kontaktieren.

Ein derartige Funktionsmodul ist dem Fachmann bekannt und wird beispielsweise in der WO 01/41484 A1 beschrieben.

Es ist insbesondere für Kraftfahrzeuge bekannt, mit einem derartigen Gerätehalter eine in einer Steuerbox angeordnete Steuerungsanordnung zusammenwirken zu lassen, die fest in das Kraftfahrzeug eingebaut sein kann. Die Verbindung zwischen dem jeweiligen Gerätehalter und der Steuerbox kann dabei standardisiert ausgebildet sein, so dass an eine fest eingebaute Steuerbox unterschiedliche Gerätehalter für unterschiedliche Mobiltelefone anschließbar sein können. Dadurch wird erreicht, dass beim Wechsel eines Mobiltelefons nur der zugehörige Gerätehalter mit ausgewechselt werden muss, während die fest eingebaute Steuerbox im Fahrzeug verbleiben kann und zum Anschluss eines anderen Gerätehalters, der für ein anderes Mobiltelefon ausgebildet ist, geeignet ist.

Die Ankopplung des Gerätehalters an die Steuerbox erfolgt mit Hilfe eines Aufnahmehalters, der eine für unterschiedliche Aufnahmehalterungen eines Sortimentes typenübergreifend standardisierte Aufnahmekontur für die spezifischen Gerätehalter hat. Mit Hilfe von mechanischen Verriegelungselementen an dem Aufnahmehalter werden dann die mobiltelefonspezifischen Gerätehalter in den Aufnahmehalter geklemmt und dort lösbar verriegelt. Der Aufnahmehalter selbst ist im Fahrzeug fest eingebaut oder wiederum mit einer im Fahrzeug fest montierten Halterung verbunden.

Bei einem Sortiment mit unterschiedlichen Aufnahmehaltertypen, die unterschiedliche Funktionalitäten bereitstellen, wird zur Reduzierung der Werkzeug- und Fertigungskosten oftmals eine typenübergreifend standardisierte Aufnahmekontur für alle verfügbaren Gerätehalter des Sortiments genutzt. Sämtliche Gerätehalter eines Sortiments haben dann eine mit der typenübergreifend standardisierten Aufnahmekontur ebenfalls standardisierte Verriegelungskontur, um die Geräte unabhängig von dem Aufnahmehaltertyp in jedem der Aufnahmehalter zu verriegeln. Die standardisierte Aufnahme- und Verriegelungskontur ist üblicherweise herstellerspezifisch.

Die herkömmlichen Ausführungen haben allerdings den Nachteil, dass bei einem nach außen nicht sichtbaren Funktionsumfang der Aufnahmehalter das elektronische Gerät bei nicht vorhandener Funktionsunterstützung des Aufnahmehalters diese Funktion nicht ausführt und für den Nutzer die Ursache nicht erkennbar ist.

Daher wird in der Regel vorgezogen, die Aufnahmekonturen von Aufnahmehalter und Gerätehalter typenindividuell abzustimmen, was zu einem erhöhten Aufwand in der Fertigung führt.

Weiterhin ist bekannt, den bereitgestellten Funktionsumfang mit Hilfe einer Steuerungssoftware in Abhängigkeit von dem jeweiligen Typ des Aufnahmehalters, Gerätehalters und/oder elektronischen Gerätes zu begrenzen.

Aufgabe der Erfindung ist es daher, ein verbessertes elektromechanisches Funktionsmodul der eingangs genannten Art sowie einen verbesserten Aufnahmehalter und Gerätehalter hierfür zu schaffen, mit dem die Werkzeug- und Fertigungskosten reduziert werden können und bei dem dennoch ein Zusammenwirken zwischen Gerätehalter und Aufnahmehalter in Abhängigkeit von dem Aufnahmehalter- und Gerätehaltertyp sichergestellt ist.

Die Aufgabe wird mit dem elektromechanischen Funktionsmodul dadurch gelöst, dass an der für unterschiedliche Aufnahmehaltertypen eines Sortiments ansonsten identischen, typenübergreifend standardisierten Aufnahmekontur der Aufnahmehalter und an den Gerätehaltern typenindividuelle Vorsprung und/oder Vertiefungen derart vorgesehen sind, dass ein für einen ersten Aufnahmehaltertyp vorgesehener Gerätehalter nicht mehr geeignet ist, von einem zweiten Aufnahmehaltertyp desselben Sortiments aufgenommen zu werden.

Die Nutzung einer typenübergreifend standardisierten Aufnahmekontur hat den Vorteil, dass die Werkzeuge für die Aufnahmehalter und Gerätehalter für die Formung der Aufnahmekontur identisch sein können. Es werden in der Fertigung lediglich zusätzliche Vorsprünge und/oder Vertiefungen typenindividuell angebracht. Die kann bei einem standardisierten Werkzeug für die Spritzgussfertigung einfach mit Hilfe von verfahrbaren Fingern erfolgen.

Durch die mit den Vorsprüngen und/oder Vertiefungen bereitgestellte mechanische Codierung des Aufnahmesystems wird zudem verhindert, dass beim Einstecken eines Gerätehalters in einen Aufnahmehalter mit reduzierter Funktionalität der Eindruck eines defekten elektronischen Gerätes erweckt wird, wenn dieses eine vom Aufnahmehalter nicht unterstützte Funktion nicht bereitstellt. Dabei wird vorausgesetzt, dass dem Nutzer der Funktionsumfang bekannt ist, für den sein Gerätehalter vorgesehen ist, da im normalen Betrieb der Gerätehalter benutzerindividuell ist und lediglich an mehreren Aufnahmehaltern in unterschiedlichen Fahrzeugen, zum Beispiel im eigenen Fahrzeug und Mietwagen, eingesetzt wird.

Besonders vorteilhaft ist es, wenn die Vorsprünge und/oder Vertiefungen abwärts kompatibel derart ausgebildet sind, dass Gerätehalter für höherwertige Aufnahmehaltertypen zur Aufnahme durch niederwertigere Aufnahmehaltertypen geeignet und Gerätehalter für niederwertigere Aufnahmehaltertypen nicht zur Aufnahme durch höherwertigere Aufnahmehaltertypen geeignet sind.

Damit kann ein Sortiment mit Aufnahmehaltern und zugehörigen Gerätehaltertypen unterschiedlicher Preis- und Funktionskategorie bereitgestellt werden. Premium-Varianten von Gerätehaltern passen somit in alle untergeordneten Varianten einschließlich einer Low-Variante von Aufnahmehaltertypen des Sortiments. Hingegen passen niederpreisige Gerätehalter nicht in Aufnahmehalter einer höherpreisigen Klasse. Selbstverständlich kann eine solche mechanische Codierung auch auf mehrere Stufen ausgedehnt werden, d. h. dass zwischen der Low- und der Premium-Variante mindestens eine Zwischenvariante codiert wird.

Die Wertigkeit der Aufnahmehaltertypen kann beispielsweise abhängig von dem elektrischen Funktionsumfang der eine Steuerungselektronik und/oder elektrische Kontakte aufweisenden Aufnahmehalter sein. Die Vorsprünge und/oder Vertiefungen werden somit in Abhängigkeit davon definiert angeordnet, welchen Funktionsumfang der jeweilige Aufnahmehaltertyp bereitstellt. Die hierzu passenden Gerätehalter werden mit entsprechenden korrespondierenden Verriegelungskonturen versehen.

Besonders vorteilhaft ist es, wenn der Aufnahmehalter einen verschiebbar gelagerten Verriegelungsabschnitt mit einem Kragen zum Übergreifen eines Vorsprungs des Gerätehalters hat, wobei die Vorsprünge und/oder Vertiefungen an dem Verriegelungsabschnitt angeordnet sind. Die mechanische Codierung erfolgt daher im Zeitpunkt der mechanischen Verriegelung, wenn versucht wird, den Vorsprung des Gerätehalters in den Kragen des Verriegelungsabschnitts des Aufnahmehalters einzuschieben und den Verriegelungsabschnitt zum Einrasten des Gerätehalters in den Aufnahmehalter zu verschieben. Wenn die Vorsprünge und/oder Vertiefungen am Aufnahmehalter und Gerätehalter nicht zueinander passen, wird der Vorsprung des Gerätehalters vom Kragen nicht oder nicht ausreichend übergriffen, so dass der Gerätehalter abrutscht. Der Nutzer erkennt dann sofort, dass der Typ des Aufnahmehalters nicht mit dem Gerätehalter kompatibel ist, obwohl beide zu demselben Sortiment gehören.

Eine preiswerte Fertigung mit ansonsten gleich bleibendem Werkzeug ist möglich, wenn innerhalb des Kragens mindestens ein Steg zur Bildung des Vorsprungs ausgebildet ist. Dieser Steg kann durch verschiebbare Finger im Werkzeug während des Spritzgussvorgangs zur Herstellung des Aufnahmehalters erzeugt werden.

Bei diesen Ausführungsformen ist es weiterhin vorteilhaft, wenn der Gerätehalter einen Vorsprung in Form einer Lippe zum Eingriff in den Kragen des Aufnahmehalters und mit den Vorsprüngen und/oder Vertiefungen des Aufnahmehalters zusammenwirkende Vertiefungen und/oder Vorsprünge hat. Hierbei kann in der Lippe beispielsweise mindestens eine Ausnehmung zum Eingriff in den mindestens einen Steg ausgebildet sein. Auch diese Ausnehmung kann mit Hilfe eines im Spritzgusswerkzeug vorgesehenen verschiebbar gelagerten Fingers gefertigt werden.

Der Aufnahmehalter ist vorzugsweise ein fahrzeugseitig montierbarer Freisprecheinrichtungshalter und der Gerätehalter ein typenpezifischer Halter für Mobiltelefone.

Die Aufgabe wird weiterhin mit einem Aufnahmehalter mit typenübergreifend standardisierter Aufnahmekontur und mechanischen Verriegelungselementen zur Verwendung in einem solchen elektromechanischen Funktionsmodul gelöst, indem typenindividuelle Vorsprünge und/oder Vertiefungen an dem Aufnahmehalter vorgesehen sind.

Weiterhin wird die Aufgabe mit einem Gerätehalter mit einer typenübergreifend standardisierten Verriegelungskontur zur Verwendung in einem oben beschriebenen elektromechanischen Funktionsmodul dadurch gelöst, dass typenindividuelle Vorsprünge und/oder Vertiefungen an dem Gerätehalter vorgesehen sind.

Mit den Aufnahmehaltern und Gerätehaltern, die typenindividuelle Vorsprünge und/oder Vertiefungen haben, wird ein Sortiment unterschiedlicher Aufnahmehalter- und Gerätehaltertypen mit typenübergreifend standardisierter Aufnahmekontur bereitgestellt, bei dem dennoch ein typenindividuelles Zusammenwirken zwischen Gerätehalter und Aufnahmehalter auf einfache Weise sichergestellt werden kann.

Die Erfindung wird nachfolgend anhand von Ausführungsbeispielen in der beigefügten Zeichnung beispielhaft näher erläutert. Es zeigt:

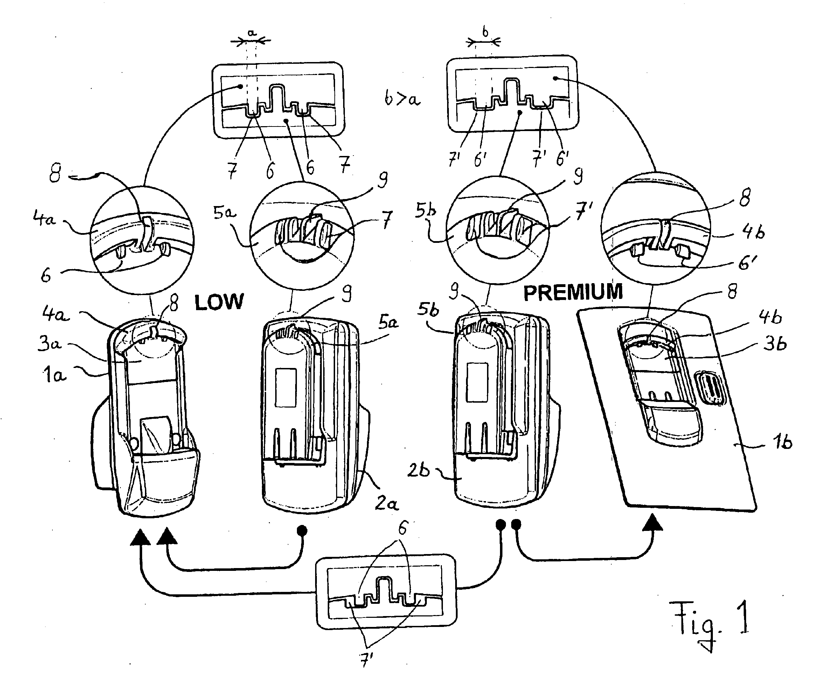

- Figur 1 -: Skizze eines Aufnahmehalters und eines Gerätehaltes jeweils einer Low- und Premium-Version mit Aufnahmekonturen in perspektivischer und Querschnittsansicht zur Darstellung der Rückwärtskompatibilität.

Die Figur 1 lässt eine Darstellung eines ersten elektromechanischen Funktionsmoduls für eine Low-Variante und eines zweiten elektromechanischen Funktionsmoduls für eine Premium-Variante erkennen.

Das elektromechanische Funktionsmodul besteht jeweils aus einem Aufnahmehalter 1 a, 1 b und einem Gerätehalter 2a, 2b für ein elektronisches Gerät. Im beschriebenen Fall ist das elektronische Gerät ein nicht dargestelltes Mobiltelefon. Die Aufnahmehalter 1 a, 1b haben an ihrem oberen Ende einen verschieblich gelagerten Verriegelungsabschnitt 3a, 3b mit einem Kragen 4a, 4b zum Übergreifen eines Vorsprungs 6 im oberen Bereich des Gerätehalters, der eine abgerundete Kontur hat.

Die Gerätehalter 2a, 2b werden mit dem Vorsprung 6 in den Kragen 4a, 4b des verschieblichen Verriegelungsabschnitts 3a, 3b des Aufnahmehalters 1 a, 1b gesteckt und der Verriegelungsabschnitt 4a, 4b wird nach oben geschoben. Dann wird der Gerätehalter 2a, 2b im unteren Bereich in die Aufnahmemulde eingedrückt und der Gerätehalter 2a, 2b nach unten in der Mulde des Aufnahmehalters 1a, 1b verschoben. Dabei gleitet der Verriegelungsabschnitt 3a, 3b zurück und der Gerätehalter 2a, 2b wird elektrisch mit dem Aufnahmehalter 1a, 1b durch Kontaktelemente im unteren Bereich der Mulde kontaktiert. Es ist insbesondere aus den Ausschnittsvergrößerungen erkennbar, dass im Bereich des Kragens 4a, 4b der Aufnahmehalter 1a, 1b eine typenindividuelle Anordnung von Vorsprüngen 6 und Vertiefungen 7 vorgesehen sind. Ferner ist am Kragen (4a,4b) ein Zentrierschlitz (8) vorgesehen, welcher mit der Zentrierklane (9) am Vorsprung (5a, 5b) zusammenwirkt. Bei der Low-Variante sind die Vorsprünge 6 in Form von nach vorne abgerundeten Profilen schmaler ausgebildet, als die Vorsprünge 6 des Aufnahmehaltes 1b der Premium-Variante.

In entsprechender Weise sind korrespondierende Vorsprünge 6 und Vertiefungen 7 an dem Vorsprung 5a, 5b der Gerätehalter 2a, 2b vorgesehen. Diese Gruppe von Vorsprüngen 6 und Vertiefungen 7 ist derart typenindividuell auf die Gruppe von Vorsprüngen 6 und Vertiefungen 7 des Aufnahmehalters 1a, 1b angepasst, dass der Gerätehalter 2a der Low-Variante in den Aufnahmehalter 1a der Low-Variante und der Gerätehalter 2b der Premium-Variante in den Aufnahmehalter 1b der Premium-Variante eingeführt werden kann. Andererseits sind die typenindividuellen Vorsprünge 6 und Vertiefungen 7 der Premium-Variante auf die Low-Variante abwärts kompatibel ausgebildet, so dass der Gerätehalter 2a insbesondere aufgrund der schmaleren Vertiefungen 7 am Vorsprung 5a des Gerätehaltes 2a vom Kragen 4b des Aufnahmehalters 1b der Premium-Variante abgleitet, da dort die Vorsprünge 6 breiter als die korrespondierenden Vertiefungen 7 in dem Gerätehalter 2a der Low-Variante sind. Dies hat zur Folge, dass ein Gerätehalter 2a der Low-Variante nicht in den Aufnahmehalter 1b der Premium-Variante gesteckt werden kann, obwohl die Aufnahmekontur ansonsten identisch ist.

Auf der anderen Seite kann der Gerätehalter 2b der Premium-Variante in Verbindung mit dem Aufnahmehalter 1a der Low-Variante genutzt werden, da die Vertiefungen 7 am Vorsprung 5b des Gerätehalters 2b der Premium-Variante b breiter als die Vorsprünge 6 an dem Kragen 4a des Aufnahmehalter 1a der Low-Variante a sind. Der Gerätehalter 2b der Premium-Variante kann somit problemlos in den Verriegelungsabschnitt 3a des Aufnahmehalters 1a der Low-Variante eingesteckt werden.

Die typenindividuelle Codierung der Gerätehalter 2a, 2b und zugehörigen Aufnahmehalter 1a, 1b ist im Querschnitt im oberen Bereich der Figur 1 skizziert. Dabei wird deutlich, dass die typenindividuelle Codierung durch die Breite der Vorsprünge 6 (Profile) am Kragen 4a, 4b der Aufnahmehalter 1a, 1b sowie durch die Breite der korrespondierenden Vertiefungen 7 am Vorsprung 5a, 5b der Gerätehalter 2a, 2b festgelegt ist.

Im unteren Bereich ist die Abwärtskompatibilität des Gerätehalters 2b der Premium-Variante als Querschnittsansicht der Überlappung der typenindividuellen Vorsprünge 6 und Vertiefungen 7 am Gerätehalter 2b und dem Aufnahmehalter 1a der Low-Variante gezeigt. Es wird deutlich, dass aufgrund der breiteren Vertiefungen 7 am Vorsprung 5b des Gerätehalters 2b der Premium-Variante, diese Vertiefungen 7 in die schmaleren Vorsprünge 6 am Kragen 4a des Aufnahmehalters 1a der Low-Variante eingeführt werden können.

Selbstverständlich ist es möglich, neben den dargestellten Low- und Premium-Varianten auch Zwischenstufen vorzusehen, die entsprechend abwärts kompatibel mit Hilfe der Vorsprünge 6 und Vertiefungen 7 codiert werden.

## Patentansprüche

1. Elektromechanisches Funktionsmodul, bestehend aus einem Aufnahmehalter (1a, 1b) und einem Gerätehalter (2a, 2b), der an mindestens zwei unterschiedliche Sortimente von Gerätehaltern (2a) mit einer höherwertigen Funktionalität und von Gerätehaltern (2b) mit einer niederwertigeren Funktionalität angepasst ist, zur Befestigung der Geräte, insbesondere der Mobiltelefone, wobei der Aufnahmehalter (1 a und 1b) mit einem Sitz für den Bindeteil des Gerätehalters (2a, 2b) versehen ist, die durch einen mit einem Zentrierschlitz (8) versehenen Kragen (4a, 4b) begrenzt ist und der Gerätehalter (2a, 2b) in seinem Befestigungsteil mit einem den Kragen (4a, 4b) negativ abbildenden Vorsprung (5a, 5b) versehen ist, der mit einer mit dem Zentrierschlitz (8) des Kragens (4a, 4b) des Aufnahmehalters (1a, 1b) zusammenwirkenden Zentrierklaue (9) versehen ist, **dadurch gekennzeichnet, dass** es mit einem Codierungssatz versehen ist, der aus Codierungsvorsprüngen (6, 6') des Kragens (4a, 4b) des Aufnahmehalters (1a, 1b) und aus den mit ihnen zusammenwirkenden Codierungsvertiefungen (7, 7') des Vorsprungs (5a, 5b) des Gerätehalters (2a, 2b) besteht.

2. Elektromechanisches Funktionsmodul nach Anspruch 1, **dadurch gekennzeichnet, dass** seine Codierungselemente des Kragens (4a, 4b) des Aufnahmehalters (1a, 1b) aus diesem Kragen vorspringende Codierungsvorsprünge (6, 6') bilden und die Codierungselemente des Vorsprungs (5a, 5b) des Gerätehalters (2a, 2b) Codierungsvertiefungen (7, 7') bilden, mit denen die Codierungsvorsprünge (6, 6') des Aufnahmehalters (1a, 1b) zusammenwirken oder umgekehrt.̅

3. Elektromechanisches Funktionsmodul nach Anspruch 1 oder 2, **dadurch gekennzeichnet, dass** die Codierungselemente des Aufnahmehalters (1 b) zur Befestigung der Gerätehalter (2b) mit einer höherwertigen Funktionalität mit Codierungsvorsprüngen (6') und Codierungsvertiefungen (7') ausgestattet sind, deren mindestens eine Abmessung (b) größer als die ihr entsprechende Abmessung (a) des für die Gerätehalter (2a) mit einer niedrigwertigeren Funktionalität vorgesehehen Aufnahmehalters (1a) ist, wodurch der Aufnahmehalter (1a) sowohl für die Befestigung der Gerätehalter (2a) mit einer niedrigwertigeren Funktionalität, als auch der Gerätehalter (2b) mit einer höherwertigen Funktionalität geeignet ist und der Aufnahmehalter (1b) nur für die Befestigung der Gerätehalter (2b) mit einer höherwertigen Funktionalität geeignet ist.

## Claims

1. An electromechanical functional module comprising a receiving holder (**1a**, **1b**) and a device holder (**2a, 2b**), said module being adapted for at least two different assortments of said device holders of lower (**2a**) and higher (**2b**) functionality for fastening therein devices, especially mobile phones, wherein said receiving holder (**1a, 1b**) has a socket adapted for mounting therein a connecting part of said device holder (**2a, 2b**) and being restricted by a blocking flange (**4a, 4b**) with an alignment slot (**8**), and said device holder (**2a, 2b**) has, in its fastening part, a projection (**5a, 5b**) of a shape being a negative representation of said blocking flange (**4a, 4b**) and having an alignment fang (**9**), which cooperates with said alignment slot (**8**) of said receiving holder (**1a, 1b**), **characterized in that** said module has a coding set comprising coding protrusions (**6, 6**') of said blocking flange (**4a, 4b**) of said receiving holder (**1a, 1b**) and coding cavities (**7, 7**') of said projection (**5a, 5b**) of said device holder (**2a, 2b**), which co-operate with said coding protrusions.

2. An electromechanical functional module according to claim 1, **characterized in that** its coding elements of said blocking flange (**4a, 4b**) of said receiving holder (**1a**, **1b**) comprise said coding protrusions (**6, 6'**) protruding from said blocking flange, while its coding elements of said projection **(5a, 5b)** of said device holder **(2a, 2b)** comprise coding cavities **(7, 7')** into which said coding protrusions **(6, 6')** of said receiving holder **(1 a, 1 b)** enter, or inversely.

3. An electromechanical functional module according to claim 1 or 2, **characterized in that** its coding elements of said receiving holder (**1b**) for fastening said device holders **(2b)** of higher functionality comprise said coding protrusions **(6')** and said coding cavities **(7'),** at least one dimension **(b)** of which is greater than a corresponding dimension **(a)** of said receiving holder **(1a)** assigned for fastening said device holders **(2a)** of lower functionality, so as said receiving holder **(1a)** is assigned for fastening both said device holders **(2a)** of lower functionality and said device holders **(2b)** of higher functionality, while said receiving holder (**1b**) is assigned only for fastening said device holders **(2b)** of higher functionality.

## Revendications

1. Le module fonctionnel électromécanique comprend une base de réception (1a, 1b) ainsi que d'une base de fixation (2a, 2b), adaptée à au moins deux sortes de bases de fixation de fonctionnalité basse (2a), et haute (2b) tout particulièrement pour la fixation des téléphones portables. De plus, les bases de réception (1a) et (1b) sont équipées d'un récepteur facilitant l'encastrement de la base de fixation (2a, 2b), limité par un collier de blocage (4a, 4b), pourvue d'une fente de centrage (8), alors que la base de fixation (2a, 2b) est pourvue dans sa partie fixant d'une griffe (5a, 5b) de forme inverse au collier (4a, 4b) et équipée d'une griffe de centrage (9), travaillant avec la fente de centrage (8) du collier de blocage (4a, 4b) de la base de réception (1a, 1b), **caractéristique en cela qu**'il est équipé d'un ensemble de codage, constitué des griffes de centrage (6, 6') du collier de blocage (4a, 4b) de la base de réception (1a, 1b) et compatibles avec les fentes de codage (7, 7') de la griffe (5a, 5b) de la base de fixation (2a, 2b).

2. Le module fonctionnel électromécanique selon l'avertissement nr1, se **caractérise par** son élément de codage du collier (4a, 4b) de la base de réception (1a, 1b) constitué des griffes de codage (6, 6'), alors que les éléments de codage de la griffe (5a, 5b) de la base de fixation (2a, 2b) sont constituées de fentes de codages (7, 7'), dans lesquelles peuvent s'encastrer les griffes de codage (6, 6') de la base de fixation (1a, 1b), ou inversement.

3. Le module fonctionnel électromécanique selon l'avertissement nr1 ou nr2 se **caractérise par** son élément de codage de la base de réception (1b) pour fixer les bases de fixation (2b) de plus grande fonctionnalité équipées de griffes de codage (6') et de fentes de codage (7'), dont au moins une dimension (b) est supérieure à la dimension lui étant adaptée (a) de la base de réception (1a) destinée aux bases de fixation (2a) de fonctionnalité moindre. Ainsi la base de réception (1a), peut servir à la fois pour les base de fixation (2a) de fonctionnalité moindre et pour les bases (2b) de fonctionnalité supérieure, alors que la base de réception (1b) n'est destinée qu'aux bases de fixation (2b) de fonctionnalité supérieure.
